# DEMANDE DE BREVET EUROPEEN

(11) **EP 2 226 531 A1**
(43) Date de publication de la demande: **08.09.2010**
(21) Numéro de dépôt: 10305220.5
(22) Date de dépôt: 04.03.2010
(51) Int. Cl.: F16H 59/02

(54) **Poignée de commande de l'avance d'un engin incorporant des commandes dont les fonctions varient en fonction de l'inclinaison transversale de ladite poignée**

(30) Priorité: 06.03.2009 FR 0951420
(71) Demandeur: ETABLISSEMENTS GREGOIRE S.A., F-16100 Cognac (FR)
(72) Inventeur: Desrentes, Jean-Luc, 16100, LOUZAC SAINT ANDRE (FR)
(74) Mandataire: Fantin, Laurent

(57) **Abrégé**

L'objet de l'invention est une poignée de commande assurant le contrôle de l'avance d'un engin, ladite poignée de commande comprenant un manche (24) apte à pivoter autour d'un premier axe de rotation et d'un second axe de rotation, des moyens pour assujettir le mouvement d'avance en fonction du basculement dudit manche (24) autour du premier axe de rotation, un moyen de verrouillage et de déverrouillage de l'inversion du sens d'avance, et au moins une commande (40), caractérisé en ce qu'elle comprend au moins un moyen (42) pour contrôler l'inclinaison du manche (24) autour du second axe de rotation et des moyens de contrôle/commande qui en fonction de l'inclinaison du manche de la poignée de commande autour du second axe de rotation et de l'état de la commande (40) génèrent une fonction.

## Description

La présente invention se rapporte à une poignée de commande de l'avance d'un engin incorporant des commandes dont les fonctions varient en fonction de l'inclinaison transversale de ladite poignée. L'invention est plus particulièrement destinée aux engins à transmission hydrostatique et notamment aux engins agricoles comme par exemple les enjambeurs.

Les engins à transmission hydrostatique comprennent une pompe pour faire circuler un fluide dans un circuit hydraulique afin d'alimenter une motorisation assurant le mouvement d'avance de l'engin. Pour commander la pompe qui commande elle-même la motorisation, l'engin comprend une manette ou poignée de commande qui peut pivoter selon un axe horizontal dans un plan sensiblement parallèle à la direction d'avance de l'engin.

Ainsi, lorsque l'utilisateur bascule la poignée de commande vers l'avant, il commande un mouvement vers l'avant de l'engin alors que lorsqu'il la bascule vers l'arrière, il commande le mouvement vers l'arrière de l'engin.

Cette poignée de commande comprend une position neutre, correspondant sensiblement à la verticale (non basculée vers l'arrière ou vers l'avant) correspondant à l'état immobile de l'engin. La vitesse de l'engin vers l'avant ou vers l'arrière est fonction de l'angle de la poignée de commande par rapport à cette position neutre.

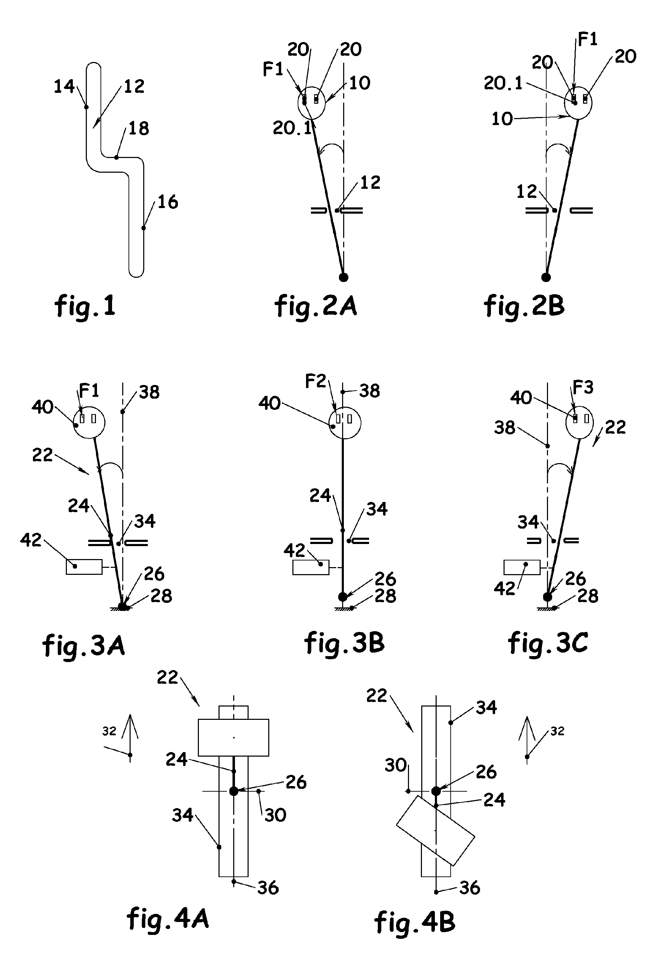

Selon l'art antérieur, comme illustré sur la figure 1, une poignée de commande 10 comprend un manche qui circule dans une fente 12 avec un premier segment 14 correspondant à un déplacement vers l'avant et orienté parallèlement à la direction d'avance, un second segment 16 correspondant à un déplacement vers l'arrière et orienté parallèlement à la direction d'avance, les deux segments 14 et 16 n'étant pas alignés et étant reliés par un petit segment 18 sensiblement perpendiculaire aux deux segments 14 et 16 de manière à former un créneau. Ainsi, le passage d'un mouvement vers l'avant à un mouvement vers l'arrière se fait par un basculement de la poignée de commande 10 dans un plan perpendiculaire à la direction d'avance le long du petit segment 18 comme illustré sur les figures 2A et 2B. Ce basculement de la poignée dans un plan perpendiculaire à la direction d'avance assure la fonction de moyen de verrouillage et déverrouillage de l'inversion du sens d'avance empêchant les inversions de sens d'avance incontrôlées.

Généralement, comme illustré sur la figure 2A et 2B, la poignée de commande 10 comprend plusieurs commutateurs et/ou interrupteurs 20 qui permettent de modifier ou d'interrompre un signal utilisé pour contrôler un organe ou un système. Ainsi, ces commutateurs et/ou interrupteur sont disposés sur la face avant et/ou sur la face arrière de la poignée de commande.

A titre d'exemple, la poignée de commande peut comprendre un premier commutateur/interrupteur pour contrôler la position d'un premier outil disposé à gauche de l'engin et un deuxième commutateur/interrupteur pour contrôler la position d'un deuxième outil disposé à l'avant de l'engin et un troisième commutateur/interrupteur pour contrôler la position d'un troisième outil disposé à droite de l'engin.

Comme illustré sur les figures 2A et 2B, quelle que soit l'inclinaison de la poignée 10 (dans un plan parallèle à la direction d'avance ou dans un plan perpendiculaire à la direction d'avance), la fonction f1 découlant de la commande du commutateur et/ou interrupteur 20.1 est identique.

Le nombre de ces commutateurs et/ou interrupteurs 20 étant limité par la dimension de la poignée afin d'obtenir une bonne ergonomie tactile, le nombre de fonctions l'est également. Par conséquent, lorsque le nombre de fonctions est trop importante, certains commutateurs et/ou interrupteurs doivent être disposés en dehors de la poignée de commande 10 à un autre endroit dans la cabine ce qui nuit à l'ergonomie des commandes qui sont dispatchées dans plusieurs zones.

Aussi, la présente invention vise à pallier aux inconvénients de l'art antérieur en proposant une nouvelle poignée de commande qui offre à dimensions égales plus de fonctionnalités tout en préservant son ergonomie.

A cet effet, l'invention a pour objet une poignée de commande assurant le contrôle de l'avance d'un engin, ladite poignée de commande comprenant un manche apte à pivoter autour d'un premier axe de rotation et d'un second axe de rotation, des moyens pour assujettir le mouvement d'avance en fonction du basculement dudit manche autour du premier axe de rotation, un moyen de verrouillage et de déverrouillage de l'inversion du sens d'avance, et au moins une commande, caractérisé en ce qu'elle comprend au moins un moyen pour contrôler l'inclinaison du manche autour du second axe de rotation et des moyens de contrôle/commande qui en fonction de l'inclinaison du manche de la poignée de commande autour du second axe de rotation et de l'état de la commande génèrent une fonction.

D'autres caractéristiques et avantages ressortiront de la description qui va suivre de l'invention, description donnée à titre d'exemple uniquement, en regard des dessins annexés sur lesquels :
- la figure 1 est un schéma illustrant un chemin d'une poignée de commande selon l'art antérieur,
- la figure 2A est un schéma illustrant la position d'une poignée de commande selon l'art antérieur dans un plan dit transversal correspondant à un mouvement vers l'avant d'un engin,
- la figure 2B est un schéma illustrant la position d'une poignée de commande dans un plan dit transversal correspondant à un mouvement vers l'arrière d'un engin,
- la figure 3A est un schéma illustrant une poignée de commande selon l'invention dans une première position correspondant à une fonction f1,
- la figure 3B est un schéma illustrant une poignée de commande selon l'invention dans une deuxième position correspondant à une fonction f2,
- la figure 3C est un schéma illustrant une poignée de commande selon l'invention dans une troisième position correspondant à une fonction f3,
- la figure 4A est un schéma illustrant une poignée de commande selon l'invention dans une position correspondant à un mouvement d'avance vers l'avant de l'engin,
- la figure 4B est un schéma illustrant une poignée de commande selon l'invention dans une position correspondant à un mouvement d'avance vers l'arrière de l'engin,
- la figure 5 est une vue en perspective d'une poignée de commande selon un mode de réalisation de l'invention,
- la figure 6 est une vue en perspective illustrant la poignée de commande de la figure 5 avec un boitier transparent,
- la figure 7 est une vue en perspective illustrant le mécanisme de pivotement sur elle-même de la poignée de commande visible sur la figure 5, et
- la figure 8 est une vue de dessus illustrant la fente dans laquelle circule le manche de la poignée de commande selon une variante de réalisation.

Sur les différentes figures 3A à 3C, 4A, 4B, on a représenté en 22 une poignée de commande prolongée par un manche 24 relié par des moyens de liaison 26 à un bâti 28.

A titre d'exemple non limitatif, dans le cas d'un enjambeur, la commande peut être utilisée pour ajuster la position d'un outil porté par l'enjambeur.

Cette poignée de commande 22 est destinée à équiper un engin à transmission hydrostatique. Ainsi, cette poignée de commande 22 peut basculer autour d'un premier axe de rotation 30 prévu au niveau des moyens de liaison 26.

Ce basculement permet de contrôler l'avance de l'engin. A cet effet des moyens sont prévus pour assujettir le mouvement d'avance selon le basculement du manche autour du premier axe de rotation. Pour rendre cette commande plus intuitive, l'axe de rotation 30 est perpendiculaire à la direction d'avance de l'engin matérialisée par la flèche 32.

Pour la suite de la description, on entend par direction longitudinale, la direction parallèle à la direction d'avance. Par plan longitudinal, on entend un plan contenant la direction longitudinale et perpendiculaire à l'axe de rotation 30. Par direction transversale, on entend la direction parallèle à l'axe de rotation 30 et par plan transversal un plan perpendiculaire à la direction longitudinale.

La poignée de commande 22 comprend une position neutre séparant la commande du mouvement vers l'avant et la commande du mouvement vers l'arrière.

Elle comprend également au niveau du point neutre un moyen de verrouillage et de déverrouillage qui autorise ou non le passage de la poignée de commande d'une première position dans laquelle elle commande un mouvement vers l'avant à une deuxième position dans laquelle elle commande un mouvement vers l'arrière. Selon un mode de réalisation, cette position neutre correspond à la position verticale du manche. Selon cette configuration, lorsque le manche est incliné vers l'avant comme illustré sur la figure 4A suite à un basculement autour de l'axe de rotation 30, l'engin est animé d'un mouvement vers l'avant alors que lorsque le manche est incliné vers l'arrière comme illustré sur la figure 4B suite à un basculement autour de l'axe de rotation 30, l'engin est animé d'un mouvement vers l'arrière.

De préférence, la vitesse d'avance du véhicule est proportionnelle à l'angle formé par le manche et la position neutre.

A cet effet, la poignée de commande comprend au moins un moyen de détection permettant de mesurer l'inclinaison du manche par rapport à la position neutre. Selon l'invention, le moyen de verrouillage et déverrouillage de l'inversion du sens d'avance ne découle pas du basculement de la poignée de commande dans un plan transversal.

Selon un mode de réalisation illustré sur la figure 4A et 4B, le moyen de verrouillage et déverrouillage de l'inversion du sens d'avance découle d'une rotation sur elle-même de la poignée dont le manche circule dans une fente 34. D'autres solutions peuvent être envisagées pour obtenir un moyen de verrouillage et de déverrouillage de l'inversion du sens d'avance.

Ainsi, la poignée de commande peut comprendre au moins un interrupteur/commutateur qui en fonction de son état actionné ou non commande le changement d'état d'une butée qui dans un premier état en saillie dans la fente 34 empêche le passage du manche d'une position correspondant à un sens d'avance vers l'avant à une autre position correspondant à un sens d'avance vers l'arrière et dans un second état rétracté autorise le passage du manche d'une position correspondant à un sens d'avance vers l'avant à une autre position correspondant à un sens d'avance vers l'arrière.

En variante, la poignée de commande peut comprendre une gâchette qui dans un premier état interdit l'inversion du sens d'avance et dans un second état autorise l'inversion du sens d'avance.

Selon l'invention, la poignée peut basculer autour d'un axe de rotation 36 parallèle à la direction longitudinale. Ainsi, la poignée de commande peut s'incliner de part et d'autre du plan longitudinal 38 comme illustré sur les figure 3A à 3C. Selon un mode de réalisation, cette rotation 36 est prévue au niveau des moyens de liaison 26 qui peuvent être de type rotule.

La poignée de commande 22 comprend au moins une commande 40 par exemple sous forme d'un commutateur ou d'un interrupteur.

Selon une caractéristique importante de l'invention, la poignée de commande comprend au moins un moyen 42 pour contrôler l'inclinaison du manche dans un plan transversal et des moyens de contrôle/commande qui en fonction de l'inclinaison du manche de la poignée de commande dans un plan transversal et de l'état de la commande 40 génère une fonction.

Selon l'invention, une même commande peut avoir plusieurs fonctions selon l'inclinaison du manche dans un plan transversal contenant le premier axe de rotation. Cette caractéristique permet avec le même nombre de commandes et donc la même ergonomie que pour l'art antérieur d'obtenir un plus grand nombre de fonctions.

Ainsi, à titre d'exemple, la même commande peut, lorsque le manche est incliné vers la gauche comme illustré sur la figure 3A, contrôler la position d'un premier outil disposé à gauche de l'engin, lorsque le manche est disposé à la verticale comme illustré sur la figure 3B, contrôler la position d'un deuxième outil disposé devant l'engin, lorsque le manche est incliné vers la droite comme illustré sur la figure 3C, contrôler la position d'un troisième outil disposé à droite de l'engin. Selon une première variante, quelle que soit la valeur de l'inclinaison du manche de la poignée de commande à droite ou à gauche, la fonction est identique. Dans ce cas, le moyen 42 de contrôle de l'inclinaison permet d'identifier trois positions, inclinée à droite, verticale et inclinée à gauche.

Selon une deuxième variante, le moyen 42 de contrôle est de type proportionnel et est apte à mesurer l'angle d'inclinaison du manche découlant du basculement autour du second axe de rotation. Cette configuration permet de faire varier la fonction produite par la commande selon la valeur de l'angle d'inclinaison du manche.

Ainsi, à titre d'exemple, une commande peut être utilisée pour ajuster la position d'un outil et le déplacer vers la gauche ou vers la droite.

Selon la première variante, l'inclinaison vers la gauche du manche provoque le déplacement de l'outil vers la gauche avec une vitesse constante alors que l'inclinaison vers la droite du manche provoque le déplacement de l'outil vers la droite avec une vitesse constante.

Selon la deuxième variante, l'inclinaison vers la gauche du manche provoque le déplacement de l'outil vers la gauche avec une vitesse de déplacement proportionnelle à l'angle d'inclinaison du manche et l'inclinaison vers la droite du manche provoque le déplacement de l'outil vers la droite avec une vitesse de déplacement proportionnelle à l'angle d'inclinaison du manche.

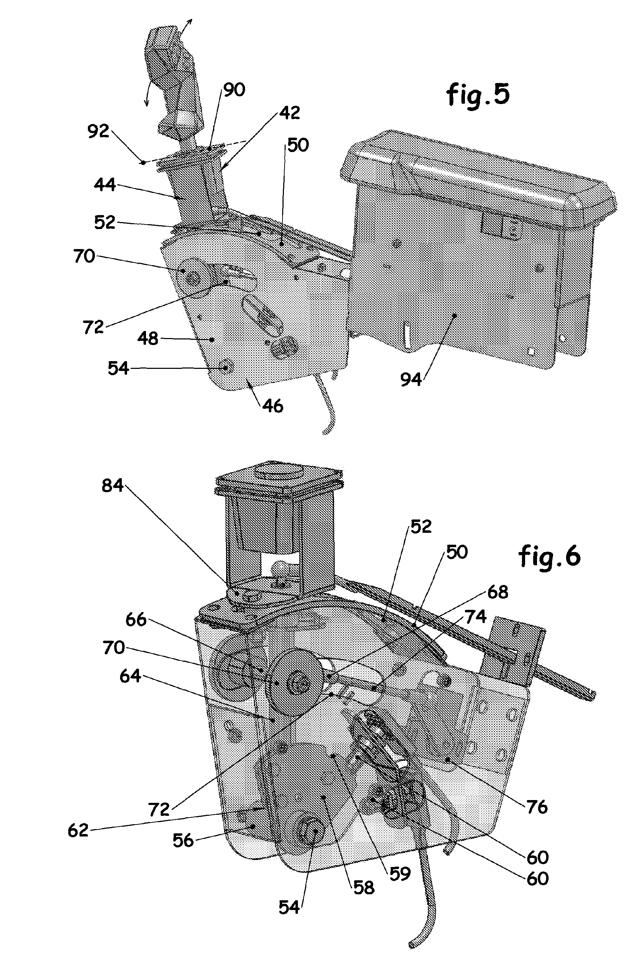

Sur les figures 5 à 8, on a représenté un mode de réalisation d'une poignée de commande à titre illustratif et non limitatif.

Cette poignée de commande comprend un manche 44 articulé par rapport à un boitier 46 comportant deux parois latérales 48 et une paroi supérieure 50 avec une fente 52 dans laquelle circule le manche 44.

Pour assurer l'articulation entre le manche 44 et le boitier 46, la poignée de commande comprend un arbre 54 définissant un premier axe de rotation, supporté par le boitier 46 et reliant les deux parois latérales 48. Un premier manchon 56 relié au manche 44 peut pivoter sur cet arbre 54 permettant ainsi au manche de basculer autour du premier axe de rotation pour contrôler l'avance du véhicule.

Une portion de disque 58 solidaire du premier manchon 56 peut pivoter autour du premier axe de rotation dans un plan perpendiculaire audit premier axe de rotation. Cette portion de disque comprend en périphérie au moins un cran 59 susceptible de coopérer avec au moins un contacteur 60 afin de repérer au moins une position privilégiée du manche 44. Selon le mode de réalisation illustré la portion de disque 58 comprend un cran 59 susceptible de coopérer avec un premier contacteur 60 lorsque le manche est dans la position correspondant à l'état immobile de l'engin (comme illustré sur la figure 6) et avec un second contacteur 60 lorsque le manche est dans la position correspondant à un mouvement vers l'arrière de l'engin.

Pour assurer le guidage du manche par rapport au boitier, la poignée de commande comprend un deuxième manchon 64 enfilé sur le manche 44 et un troisième manchon 66 relié au deuxième manchon 64 enfilé sur un arbre 68 comportant à chacune de ses extrémités des galets 70 qui circulent dans des lumières 72 ménagées au niveau des parois latérales 48.

Chaque lumière 72 a une forme oblongue avec un rayon de courbure centré par rapport au premier axe de rotation pour permettre le basculement du manche 44.

Les galets 70 comprennent deux portées avec deux diamètres, une première portée avec un diamètre sensiblement égal à la largeur de la lumière et une seconde portée disposée à l'extérieur du boitier avec un diamètre supérieur à celui de la première portée pour immobiliser en translation l'arbre 68. Des moyens de rappel sont prévus pour tendre à rapprocher les deux galets 70 l'un vers l'autre de manière à obtenir un phénomène de frein.

Des moyens sont prévus pour assujettir le mouvement d'avance de l'engin à la position angulaire du manche 44 autour du premier axe de rotation. Selon un mode de réalisation, le manche 44 est relié par l'intermédiaire d'une biellette 74 à un potentiomètre 76 susceptible de réguler le mouvement d'avance de l'engin. Selon le mode de réalisation illustré, l'inversion du sens d'avance n'est possible que si le manche a pivoté sur lui-même.

A cet effet, le manche 44 est relié au premier manchon 56 par l'intermédiaire d'une liaison 62 autorisant un mouvement de rotation sur lui-même autour d'un troisième axe de rotation confondu avec l'axe longitudinal du manche 44.

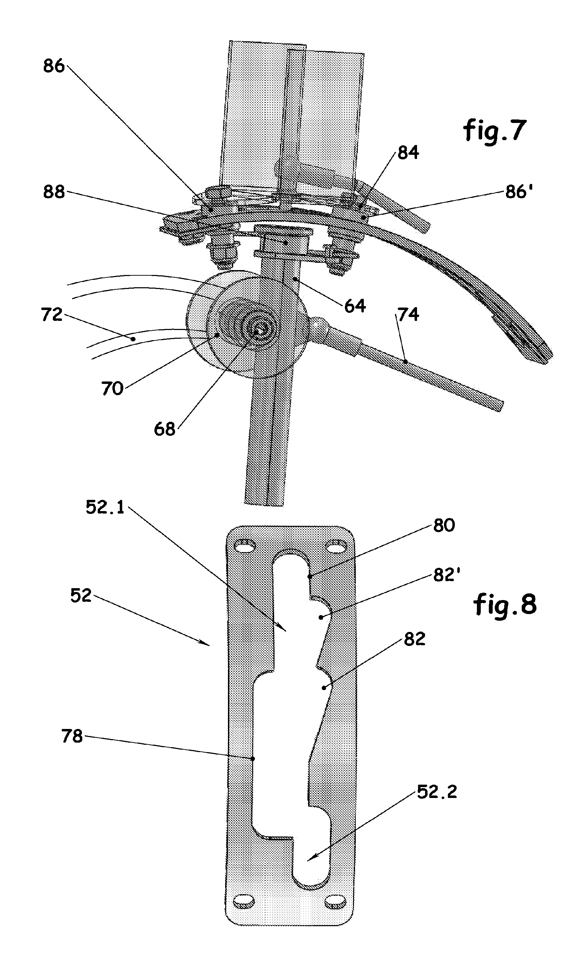

Comme illustré en détails sur la figure 8, la fente 52 comprend d'une part un premier segment 52.1 correspondant à un mouvement d'avance vers l'avant et à la position immobile comportant un côté 78 sensiblement rectiligne et un autre côté 80 comportant des encoches 82, 82', et d'autre part, un second segment 52.2 correspondant à un mouvement vers l'arrière, rectiligne et décalé par rapport au premier segment 52.1.

En complément, le manche 44 comprend une platine 84 disposée au dessus de la paroi supérieure 50 du boitier avec deux plots 86, 86' diamétralement opposés par rapport au manche 44, l'un des plots 86 étant destiné à prendre appui contre le côté 78 de la fente et l'autre plot 86' étant destiné à prendre appui contre le côté 80.

Des moyens de rappel, par exemple un ressort 88, permettent de maintenir les plots 86, 86' contre leurs côtés respectifs.

Les formes des encoches 82, 82' sont telles qu'elles autorisent un mouvement de basculement selon un premier sens du manche autour du premier axe de rotation sans que l'opérateur n'ait besoin de faire pivoter le manche et rendent impossible un mouvement de basculement du manche selon un second sens opposé au premier. Pour pouvoir basculer le manche selon le second sens, l'opérateur doit faire pivoter le manche sur lui-même de manière à faire sortir le plot 86' d'une encoche 82 ou 82'. Selon l'exemple illustré sur la figure 8, l'encoche 82 (la plus proche du second segment) correspond à l'état immobile de l'engin. Pour enclencher le mouvement vers l'avant, l'opérateur doit faire pivoter le manche sur lui-même de manière à dégager le plot 86' de l'encoche 82 et faire basculer le manche 44 vers l'avant. L'encoche 82' correspond à une mouvement vers l'avant avec une vitesse régulée. Pour augmenter la vitesse de l'engin, l'opérateur doit faire pivoter le manche sur lui-même de manière à dégager le plot 86' de l'encoche 82' et faire basculer le manche 44 vers l'avant.

Pour commander un mouvement vers l'arrière, l'opérateur doit faire pivoter le manche 44 sur lui-même de manière à introduire le plot 86 dans le second segment et basculer le manche 44 vers l'arrière.

Le manche comprend en partie supérieure au dessus de la platine 84 une seconde platine 90 supportant la poignée de commande. Selon l'invention, la poignée peut pivoter par rapport à ladite platine 90 autour d'un second axe de rotation 92 (prévu au niveau de la seconde platine 90) disposé selon la direction longitudinale, des moyens 42 contrôlant l'inclinaison du manche dans un plan transversal.

Selon une variante non représenté, l'axe de rotation 92 pourrait être interposé entre le boitier 46 et son support 94.

Bien entendu, l'invention n'est pas limitée à ce mode de réalisation du moyen de verrouillage et déverrouillage de l'inversion du sens d'avance.

## Revendications

1. Poignée de commande assurant le contrôle de l'avance d'un engin, ladite poignée de commande comprenant un manche (44) apte à pivoter autour d'un premier axe de rotation (30) et d'un second axe de rotation (36), des moyens pour assujettir le mouvement d'avance en fonction du basculement dudit manche (44) autour du premier axe de rotation (30), un moyen de verrouillage et de déverrouillage de l'inversion du sens d'avance, et au moins une commande (40), **caractérisé en ce qu'**elle comprend au moins un moyen (42) pour contrôler l'inclinaison du manche (44) autour du second axe de rotation (36) et des moyens de contrôle/commande qui en fonction de l'inclinaison du manche de la poignée de commande autour du second axe de rotation (36) et de l'état de la commande (40) génèrent une fonction.

2. Poignée de commande assurant le contrôle de l'avance d'un engin selon la revendication 1, **caractérisée en ce que** ledit moyen (42) pour contrôler l'inclinaison du manche permet d'identifier trois positions, inclinée à droite, verticale et inclinée à gauche.

3. Poignée de commande assurant le contrôle de l'avance d'un engin selon la revendication 1, **caractérisée en ce que** ledit moyen (42) pour contrôler l'inclinaison du manche est de type proportionnel et permet de mesurer l'angle d'inclinaison du manche.

4. Poignée de commande assurant le contrôle de l'avance d'un engin selon l'une quelconque des revendications précédentes, **caractérisée en ce que** le moyen de verrouillage et déverrouillage de l'inversion du sens d'avance ne découle pas du basculement de la poignée de commande autour du second axe de rotation.

5. Procédé de gestion d'au moins une commande (40) prévue au niveau d'une poignée de commande assurant le contrôle de l'avance d'un engin, ladite poignée de commande comprenant un manche (24) apte à pivoter autour d'un premier axe de rotation (30) et d'un second axe de rotation (36), des moyens pour assujettir le mouvement d'avance en fonction du basculement dudit manche (24) autour du premier axe de rotation (30), un moyen de verrouillage et de déverrouillage de l'inversion du sens d'avance, et au moins une commande (40), **caractérisé en ce que** la poignée comprend au moins un moyen (42) pour contrôler l'inclinaison du manche (24) autour du second axe de rotation (36) et des moyens de contrôle/commande et **en ce qu'**il consiste à générer une fonction selon l'état de la commande (40) et l'inclinaison du manche de la poignée de commande autour du second axe de rotation (36).

6. Procédé de gestion d'au moins une commande (40) selon la revendication 5, **caractérisé en ce que** ledit moyen (42) pour contrôler l'inclinaison du manche permet d'identifier trois positions, inclinée à droite, verticale et inclinée à gauche et **en ce qu'**il consiste à générer une fonction selon l'état de la commande (40) et de l'une des trois positions identifiées par ledit moyen (42).

7. Procédé de gestion d'au moins une commande (40) selon la revendication 5, **caractérisé en ce que** ledit moyen (42) pour contrôler l'inclinaison du manche est de type proportionnel et permet de mesurer l'angle d'inclinaison du manche, et **en ce qu'**il consiste à générer une fonction selon l'état de la commande et la valeur de l'angle d'inclinaison mesurée.
